(19) **Europäisches Patentamt / European Patent Office / Office européen des brevets**

(11) **EP 4 484 474 A1**

(12) **EUROPEAN PATENT APPLICATION**
published in accordance with Art. 153(4) EPC

(43) Date of publication:
**01.01.2025 Bulletin 2025/01**

(21) Application number: **23759812.3**

(22) Date of filing: **15.02.2023**

(51) International Patent Classification (IPC):
**C08J 5/04** (2006.01)

(52) Cooperative Patent Classification (CPC):
**C08J 5/04**

(86) International application number:
**PCT/JP2023/005178**

(87) International publication number:
**WO 2023/162811 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.02.2022 JP 2022025280**

(71) Applicant: **Toray Industries, Inc.**
**Tokyo 103-8666 (JP)**

(72) Inventors:
• **SUZUKI Koji**
**Nagoya-shi, Aichi 455-8502 (JP)**
• **ISHIDA Shoma**
**Nagoya-shi, Aichi 455-8502 (JP)**
• **NARUSE Yoshihiro**
**Nagoya-shi, Aichi 455-8502 (JP)**

(74) Representative: **Hoefer & Partner Patentanwälte mbB**
**Pilgersheimer Straße 20**
**81543 München (DE)**

(54) **FIBER-REINFORCED THERMOPLASTIC RESIN FILAMENT AND MOLDED ARTICLE THEREOF**

(57) Provided is a fiber-reinforced thermoplastic resin filament wherein: at least one substance selected from the group consisting of polyphenylene sulfide resins, polyarylene ether ketone resins, polyamides, polycarbonates, polyether imide resins, polyethersulfone resins, and liquid crystal polymer resins is impregnated in a plurality of continuous reinforcing fibers; in a cross-section perpendicular to the axial direction of the fiber-reinforced thermoplastic resin filament, the OUT/IN ratio of the reinforcing fibers is 0 to 90%, said OUT/IN ratio being defined as the ratio of the reinforcing fiber volume content in an outer periphery that spans 15% of the thickness of the filament inward from the outer edge, to the reinforcing fiber volume content in an inner portion that excludes the outer periphery; and the coefficient of static friction of the surface is 0.20 to 0.80. The filament slides easily in a material feeding mechanism of a 3D printer. This solves the problem wherein a filament is not supplied at a stable speed to a nozzle, thereby making it easy for the filament to become stuck the nozzle and reducing forming precision.

FIG. 7

**Description**

Technical Field of the Invention

Our invention relates to a fiber-reinforced thermoplastic resin filament suitably used for 3D printers and a shaped product thereof.

Background Art of the Invention

Fiber-reinforced thermoplastic resin base materials made of continuous reinforcing fibers impregnated with thermoplastic resin is excellent in specific strength, specific rigidity lightweight effect, heat resistance and chemical resistance, so that they are suitably used for transportation equipments such as airplane and automobile or various products such as industrial products, sport gear and electric/electronic component as disclosed in Patent documents 1 and 2. Because of recent increasing in demand of lightweight for airplanes and automobiles, metal parts have been replaced by resin parts while components have been downsized and modularized, so that developments of material excellent in formability and mechanical properties have been expected.

Recently, fiber-reinforced thermoplastic resin base materials have been focused on laminating molten thermoplastic resin such as fused deposition modeling used for 3D printing method. Patent document 3 discloses a deposition modeling of molten thermoplastic resin being developed in each field because of advantageous cost. The fiber-reinforced thermoplastic resin base material applied to such a forming method has typically been produced by extruding reinforcing fibers cut into short fibers together with thermoplastic resin to make a strand of fiber-reinforced thermoplastic resin. However, the short fiber-reinforced thermoplastic resin base material can hardly be improved in fiber content while such a short fiber length has only a limited reinforcing ability.

Patent document 4 discloses a continuous fiber-reinforcing thermoplastic resin base material employed to exhibit a high reinforcing ability.

Prior art documents

Patent documents

Patent document 1: JP2013-26171-A
Patent document 2: JP-H5-50434-A
Patent document 3: JP2009-500194-A
Patent document 4: JP2017-128072-A

Summary of the Invention

Problems to be solved by the Invention

Although Patent document 4 discloses a production method of stereoscopic structures having less amount of internal void and air bubble by using combined filament yarns for 3D printer filament, the combined filament having poor impregnation might deteriorate rigidity and strength of shaped products. Further, 3D printer filament having poor impregnation tends to vary in amount of resin on surface layer so that coefficient of friction might be decreased to make the filament slippery in the material feeding mechanism

Even when the 3D printer filament is made of fiber-reinforced thermoplastic resin having good impregnation, outer periphery of the 3D printer filament containing greater proportion of carbon fiber tends to have smaller coefficient of static friction close to 0.1 of carbon fibers. Such smaller coefficient of static friction of filament might make the filament slippery in the material feeding mechanism of 3D printer so that nozzles tend to be plugged with filaments and the forming precision might be deteriorated.

Means for solving the Problems

This invention mainly has the following constitution to solve the problem mentioned above.

[1] A fiber-reinforced thermoplastic resin filament comprising a plurality of continuous reinforcing fibers impregnated with at least one kind of resin selected from a group consisting of polyphenylene sulfide resin (PPS), polyarylene ether ketone resin (PAEK), polyamide (PA), polycarbonate (PC), polyetherimide resin (PEI), polyether sulfone resin (PES) and liquid crystalline polymer resin (LCP), wherein

the reinforcing fibers have an OUT/IN ratio of 0 to 90 % and the filament has a surface coefficient of static friction of 0.20 to 0.80,

the OUT/IN ratio being defined as a ratio of an outer fiber volume content of the reinforcing fibers in an outer periphery having a depth of 15% of filament thickness from an outer edge of the filament per an inner fiber volume content of the reinforcing fibers in a region other than the outer periphery.

[2] The fiber-reinforced thermoplastic resin filament according to [1], wherein the coefficient of static friction is 0.20 to 0.40.

[3] The fiber-reinforced thermoplastic resin filament according to [1], wherein the reinforcing fibers have the OUT/IN ratio of 10 to 60%.

[4] The fiber-reinforced thermoplastic resin filament according to [1], having a surface roughness Ra of 0.50 to 20 $\mu$m.

[5] The fiber-reinforced thermoplastic resin filament according to [1], wherein an average value D of dispersion parameter d [%] determined by the following steps (i) to (iv) is 90% or more.

(i) A cross section perpendicular to a filament axial direction is photographed to cover a whole cross section of the fiber-reinforced thermoplastic resin filament.

(ii) An image of the whole cross section is divided into square units each having a side length defined by Formula 4.

(iii) The dispersion parameter d [%] is calculated by Formula 5.

(iv) Steps (i) to (iii) are repeated at a plurality of cross sections to calculate average value D of the dispersion parameter d [%].

$$\text{(Formula 4) } t = 2.5a \text{ (a: fiber diameter, t: side length of unit)}$$

Dispersion parameter d [%] = (the number of units including reinforcing fibers within evaluation range) / (the number of units including a part of filament within evaluation range) x 100    (Formula 5)

[6] The fiber-reinforced thermoplastic resin filament according to [5], wherein a plurality of the dispersion parameters d used for calculating the average value D have a coefficient of variance of 4% or less.

[7] The fiber-reinforced thermoplastic resin filament according to [1], wherein a covering yarn having twists of 50 T/m or less is wound around the reinforcing fiber.

[8] The fiber-reinforced thermoplastic resin filament according to [7], having a surface roughness Ra of 10 to 20 $\mu$m.

[9] The fiber-reinforced thermoplastic resin filament according to [1], wherein the thermoplastic resin contains a filler.

[10] The fiber-reinforced thermoplastic resin filament according to [1], wherein the reinforcing fibers have the OUT/IN ratio of 15 to 80 % while the filament has a thickness of 0.01 to 3 mm and a length of 1 m or more.

[11] The fiber-reinforced thermoplastic resin filament according to [1], having a void ratio of 10 % or less.

[12] The fiber-reinforced thermoplastic resin filament according to [1], wherein the reinforcing fiber comprises a carbon fiber.

[13] A shaped product made from the fiber-reinforced thermoplastic resin filament according to [1].

Effect according to the Invention

Our invention can reduce coefficient of static friction of the filament to prevent the filament from slipping in a material feeding device of 3D printer to achieve high dimension precision in forming.

Brief explanation of the drawings

[Fig. 1] Fig. 1 is a schematic view to explain the thickness of our round-cross section filament.
[Fig. 2] Fig. 2 is a schematic view to explain the thickness of our oval-cross section filament.
[Fig. 3] Fig. 3 is a schematic view to explain the thickness of our modified-cross section filament (1).
[Fig. 4] Fig. 4 is a schematic view to explain the thickness of our modified-cross section filament (2).
[Fig. 5] Fig. 5 is a schematic view of our jig to determine the coefficient of friction.

[Fig. 6] Fig. 6 is a schematic view of our measuring device to determine the coefficient of friction.

[Fig. 7] Fig. 7 is a schematic view to explain the outer peripheral section of our filament.

[Fig. 8] Fig. 8 is a schematic view to explain how to wind a covering yarn around the core section of our filament.

Embodiments for carrying out the Invention

Hereinafter, our invention will be explained with reference to embodiments in detail.

Our fiber-reinforced thermoplastic resin filament is made by impregnating continuous reinforcing fibers with thermoplastic resin.

The continuous reinforcing fiber means a reinforcing fiber having no substantial break in the fiber-reinforced thermoplastic resin. The said "no substantial break" includes a filament consisting of 80% or more of single yarns without break although it is ideal that all single fibers have no break in a filament. The reinforcing fibers may have a unidirectionally-oriented formation such as braid and tow. To efficiently enhance mechanical properties along a specific direction, it is preferable that the reinforcing fibers are unidirectionally-arranged.

The reinforcing fiber and the covering yarn to be described later may be inorganic fiber such as carbon fiber, metal fiber, organic fiber or the like, although it is not limited in particular. Two or more kinds thereof can be used together.

The carbon fibers include a PAN-based carbon fiber made from polyacrylonitrile (PAN) fiber, a pitch-based carbon fiber made from petroleum tar or petroleum pitch, cellulose-based carbon fiber made from viscose rayon or cellulose acetate, a vapor-grown carbon fiber made from hydrocarbons, and a graphitized fiber thereof. From a viewpoint of balance between strength and elastic modulus, it is preferable that the carbon fiber is a PAN-based carbon fiber.

The metal fiber is made from a metal such as iron, gold, silver, copper, aluminum, brass and stainless steel.

The organic fiber is made from an organic material such as aramid, polybenzoxazole (PBO), polyphenylene sulfide, polyester, polyamide and polyethylene. The aramid fiber may be a para-aramid fiber excellent in strength and elastic modulus or a meta-aramid fiber excellent in incombustibility and long-term heat resistance. The para-aramid fiber may be poly-p-phenylene terephthalamide fiber, copoly-p-phenylene 3,4'-oxydiphenylene-terephthalamide fiber or the like. The meta-aramid fiber may be poly-m-phenylene isophthalamide fiber. It is preferable that the aramid fiber is a para-aramid fiber, of which elastic modulus is higher than that of meta-aramid fiber.

The inorganic fiber may be made from an inorganic material such as glass, basalt, silicon carbide and silicon nitride. The glass fiber may be E glass fiber (used for electric use), C glass fiber (used for corrosion resistance), S glass fiber, T glass fiber (high strength, high elastic modulus) or the like. The basalt fiber excellent in heat resistance is made from a mineral called basalt. Although the basalt generally contains 9 to 25 wt% of iron component such as FeO and $FeO_2$ as well as 1 to 6 wt% of titanium component such as TiO and $TiO_2$, the iron or titanium component can be added in a fusion state to make the basalt fiber.

From a viewpoint of high mechanical properties suitable for reinforcing materials, it is preferable that the fiber-reinforced thermoplastic resin filament comprises carbon fibers as a reinforcing fiber.

The fiber-reinforced thermoplastic resin filament typically comprises one or more pieces of reinforcing fiber bundles made by bundling many single yarns other than covering yarn. It is preferable that the number of single yarns is 500 to 50,000 in the reinforcing fiber bundles in said one or more pieces. From a viewpoint of handling ability, it is preferable that the reinforcing fiber bundles have single yarns of 1,000 to 50,000. It is preferably 1,000 to 40,000 and is more preferably 1,000 to 30,000. The reinforcing fiber of the fiber-reinforced thermoplastic resin filament is taken off a bobbin around which reinforcing fiber bundles are wound, differently from UD tape.

The upper limit of the number of single yarns in the reinforcing fiber bundles may be designed as considering the balance between handling ability and quality of void or dispersion to keep good handling ability and good dispersion.

Our fiber-reinforced thermoplastic resin filament has a coefficient of static friction of 0.20 to 0.80. Within the range, filaments are prevented from being slipped in the material feeding mechanism in a forming process by 3D printer to achieve high dimensional precision in forming. It is preferable that the coefficient of static friction is 0.20 to 0.60, preferably 0.20 to 0.40 in particular.

Our fiber-reinforced thermoplastic resin filament may have an outermost layer covered with thermoplastic resin. A core section consisting of the fiber-reinforced thermoplastic resin filament except the outermost thermoplastic resin layer may be covered with thermoplastic resin. Alternatively, the fiber-reinforced thermoplastic resin filament may exist partially outside the core section. The outermost layer covered with thermoplastic resin can improve adhesion at the time of forming. The coating resin may be the same as, or different from, the fiber-reinforced thermoplastic resin filament. The resin layer on the outer edge of the fiber-reinforced thermoplastic resin filament can improve adhesion between filaments (forming lateral direction or forming thickness direction) at the time of 3D printing forming. It is possible that the coating resin contain a covering yarn.

The said covering yarn means a fiber bundle wound around the core section of fiber-reinforced thermoplastic resin filament. The covering yarn wound therearound can form a convex shape to improve surface roughness Ra of filament.

The covering yarn can be wound therearound by the drawing method to be described later.

After having drawn out a fiber-reinforced thermoplastic resin filament from the nozzle of the impregnation die, the filament is inserted through shaft hole of bobbin set rotatable around the shaft. The filament part after passing through the shaft hole is heated by a heat source such as infrared heater and the covering yarn is wound closely around the melted filament surface.

The number of twists of the covering yarn wound around the filament can be optimized by adjusting rotation speed of bobbin with respect to the filament feeding speed.

The fiber-reinforced thermoplastic resin filament is subject to the following measurement method for evaluation.

(Evaluation method of coefficient of static friction)

A fiber-reinforced thermoplastic resin filament is kept for at least 16 hours according to JIS K7100 in the standard atmosphere condition of 23±2°C and 50±6% RH. Surface characteristics of the fiber-reinforced thermoplastic resin filament are maintained by keeping dust, fingerprint and foreign material away from the surface.

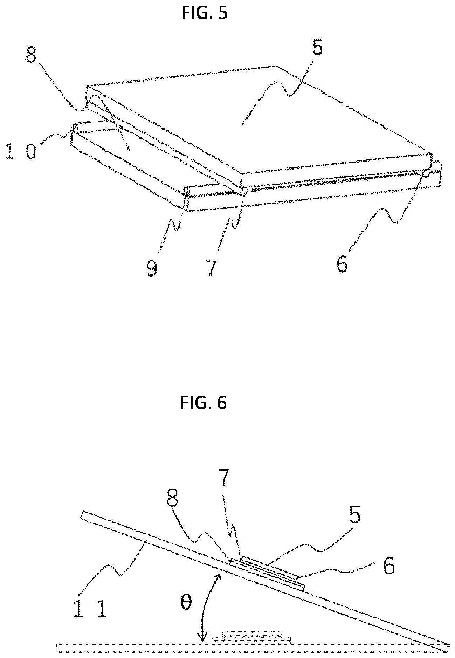

As shown in Fig. 5, plate 5 provided with fiber-reinforced thermoplastic resin filaments 6 and 7 attached in parallel and plate 8 provided as well with fiber-reinforced thermoplastic resin filament 9 and 10 attached in parallel are stacked and placed on inclination-angle adjustment stage 11. The measurement is performed in the standard atmosphere condition of 23±2°C and 50±6% RH.

Besides, plates 5 and 8 are stacked as their filaments crossing perpendicular. The coefficient of static friction is measured by calculating $\tan\theta$ from angle $\theta$ at which the fiber-reinforced thermoplastic resin filament begins to slide as shown in Fig. 6 in which the inclination speed of inclination-angle adjustment stage 11 is set to 1.5 deg/sec. Specifically, the evaluation is performed based on Examples to be described later.

Surface roughness Ra of fiber-reinforced thermoplastic resin filament is measured according to JIS B0601:2013 by using a contact-type surface roughness meter. Specifically, the evaluation is performed based on Examples to be described later.

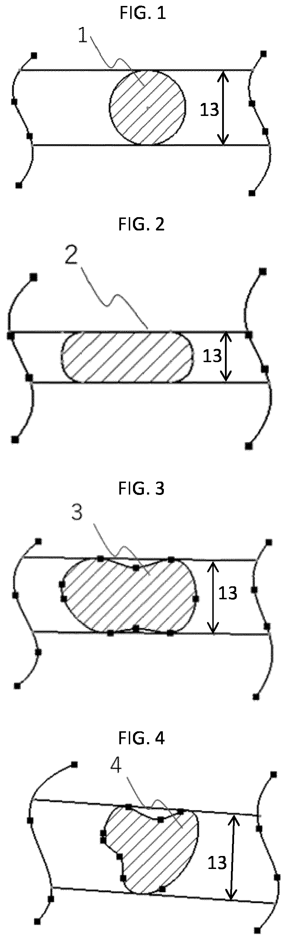

The thickness of our fiber-reinforced thermoplastic resin filament is defined as the minimum distance between parallel lines contacting the profile of cross-section of the fiber-reinforced thermoplastic resin filament perpendicular to the axial direction of the fiber-reinforced thermoplastic resin filament. Figs. 1 to 4 show how to determine the thickness. Fig. 1 shows how to determine the thickness of round-cross section filament, the thickness being constant regardless of measurement lengths. Fig. 2 shows how to determine the thickness of oval-cross section filament, the thickness becoming minimum when measured at the minor axis of the oval. Figs 3 and 4 show how to determine the thicknesses of modified-cross section filaments, the thickness is not affected by whether there is a dented part between the parallel lines.

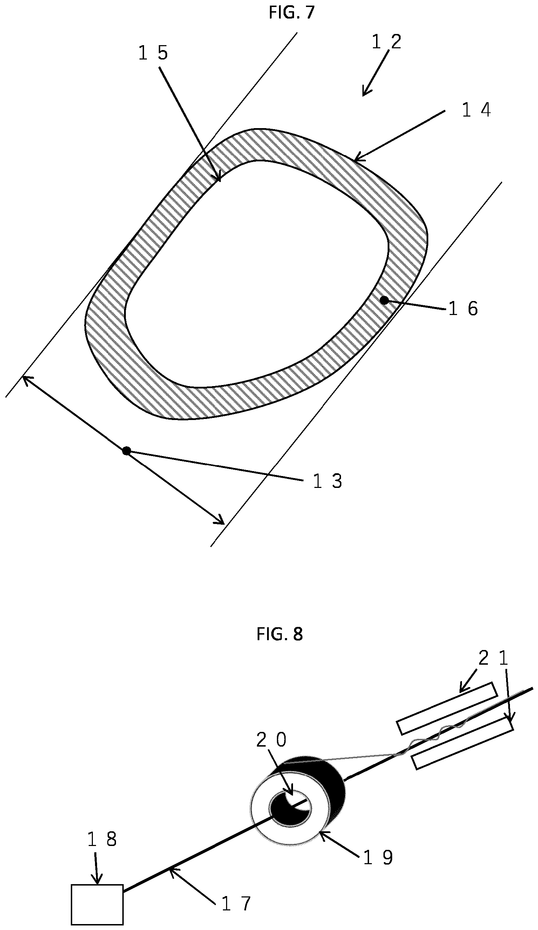

Fig. 7 shows an outer periphery of our fiber-reinforced thermoplastic resin filament, which is defined as the hatched region surrounded by outer edge 14 and parallel curved line 15 shifted inside by 15% of thickness from the outer edge with respect to a cross section perpendicular to axial direction of the fiber-reinforced thermoplastic resin filament.

It is preferable that an outer peripheral fiber volume content in an outer periphery is 0 to 90% relative to an inner fiber volume content in a region other than the outer periphery. It is more preferable that the outer peripheral fiber volume content is 5 to 80%, preferably 10 to 60%. The fiber volume content within the range causing greater resin proportion in the surface layer can suppress decreasing of coefficient of static friction.

It is preferable that the fiber-reinforced thermoplastic resin filament has a surface roughness Ra of 0.50 to 20 $\mu$m. The surface roughness within the range causing unevenness on the filament surface can prevent slippage in the material feeding device of 3D printer to achieve high dimension precision in forming.

It is more preferable that the surface roughness Ra is 0.50 to 10 $\mu$m, further preferably 0.70 to 5 $\mu$m and particularly preferably 1 to 3 $\mu$m.

It is preferable that the fiber-reinforced thermoplastic resin filament has a fiber volume content (Vf) of 15 to 80 vol% relative to a whole fiber-reinforced thermoplastic resin filament of 100 vol%. The fiber volume content of 15 vol% or more can improve strength of shaped product made from the fiber-reinforced thermoplastic resin filament. It is preferable that the Vf is 30 vol% or more, preferably 40 vol% or more. On the other hand, the fiber volume content of 80 vol% or less can improve impregnation of reinforcing fibers with thermoplastic resin. It is preferable that the fiber-reinforced thermoplastic resin filament contains 75 vol% or less of reinforcing fiber, preferably 70 vol% or less.

(Evaluation method of fiber volume content (Vf))

A reinforcing fiber volume content of fiber-reinforced thermoplastic resin filament is determined to be evaluated as follows. A sample of fiber-reinforced thermoplastic resin filament is embedded with epoxy resin, and then is polished to expose a cross section perpendicular to the axial direction of fiber-reinforced thermoplastic resin filament for good observation. The polished sample is photographed at magnification of 300 times with an ultra deep color 3D shape measurement microscope VHX-6000 (controller part)/VH-ZST (measurer part) (made by Keyence Corporation).

In the photographed image of cross section, a ratio of [total reinforcing fiber area] to [total area of region surrounded by the outer edge of fiber-reinforced thermoplastic resin filament] is measured to calculate a fiber volume content of reinforcing fiber by the following Formula 1.

Fiber volume content of reinforcing fiber [%] = 100 x (total reinforcing fiber area) / (total area of fiber-reinforced thermoplastic resin filament)　　　　(Formula 1)

When the outermost layer is coated with resin, each fiber volume content of reinforcing fiber is calculated by Formula 1 for outer or inner region with respect to the parallel curved line shifted inside by 15% of filament thickness from the outer edge in the photographed image of cross section. The OUT/IN ratio of reinforcing fiber is averaged among values determined by Formula 2 with 3 images of cross sections of the filament.

OUT/IN ratio [%] = 100 x (outer fiber volume content of reinforcing fiber in outer periphery) / (inner fiber volume content of reinforcing fiber in region other than outer periphery)　　　　(Formula 2)

When the covering yarn twisted is wound around reinforcing fiber of the fiber-reinforced thermoplastic resin filament, the number of twists is determined according to JIS L1013:2021. The covering yarn may be made of the same kind of fiber as reinforcing fiber of the fiber-reinforced thermoplastic resin filament, and alternatively made of a kind different therefrom.

It is preferable that the covering yarn of the fiber-reinforced thermoplastic resin filament has a number of twists of 50 T/m or less. Besides the number of twists should not be 0 T/m. The twists within the range forming regular unevenness of twisted yarn along longitudinal direction can prevent slippage in the material feeding mechanism of 3D printer. It is preferable that the number of twists is 5 to 30 T/m, preferably 10 to 20 T/m. In such a case, it is preferable that the fiber-reinforced thermoplastic resin filament has surface roughness Ra of 10 to 20 $\mu$m. The roughness within the range forming regular unevenness of twisted yarn on the filament surface can prevent slippage in the material feeding mechanism of 3D printer.

It is preferable that the fiber-reinforced thermoplastic resin filament comprises a reinforcing fiber bundle consisting of 500 to 50,000 filaments of single reinforcing yarn having an average diameter of 5 to 10 $\mu$m.

It is preferable that the fiber-reinforced thermoplastic resin filament comprises a thermoplastic resin of polymer alloy. The thermoplastic polymer alloy resin can improve characteristics of impregnation, mechanical properties and adhesion. For example, the polymer alloy consisting of high-viscosity thermoplastic resin and low-viscosity thermoplastic resin can achieve excellent mechanical properties and impregnation at the same time. Further, the polymer alloy consisting of high-toughness thermoplastic resins can improve interlamellar strength in forming fiber-reinforced thermoplastic resin filaments.

The thermoplastic resin may be a polyester such as polyethylene terephthalate (PET) resin, polybutylene terephthalate (PBT) resin, polytrimethylene terephthalate (PTT) resin, polyethylene naphthalate (PEN) resin and liquid crystalline polyester resin, a polyolefin such as polyethylene (PE) resin, polypropylene (PP) resin and polybutylene resin, styrene-based resin, polyoxymethylene (POM) resin, polyamide (PA) resin, polycarbonate (PC) resin, polymethylmethacrylate (PMMA) resin, polyvinyl chloride (PVC) resin, polyphenylene sulfide (PPS) resin, polyphenylene ether (PPE) resin, modified PPE resin, polyimide (PI) resin, polyamide-imide (PAI) resin, polyetherimide (PEI) resin, polysulfone (PSU) resin, modified PSU resin, polyether sulfone resin, polyketone (PK) resin, polyether ketone (PEK) resin, polyetheretherketone (PEEK) resin, polyether ketone ketone (PEKK) resin, polyarylate (PAR) resin, polyether nitrile resin, phenolic resin, phenoxy resin, a fluorine-based resin such as polytetrafluoroethylene resin, a thermoplastic elastomer such as polystyrene-based resin, polyolefin-based resin, polyurethane-based resin, polyester-based resin, polyamide-based resin, polybutadiene-based resin, polyisoprene-based resin and fluorinated resin, or a copolymer or a modification thereof, or a blended resin of two or more kinds thereof. From viewpoints of heat resistance and long-term durability, it is preferable that the thermoplastic resin is polyphenylene sulfide resin, polyarylene ether ketone resin, polyetherimide resin, polyethersulfone resin or liquid crystalline polymer resin.

The polyarylene ether ketone (PAEK) resin may be polyether ketone (PEK), polyetheretherketone (PEEK), polyetheretherketone ketone (PEEKK), polyether ketone ketone (PEKK), polyether ketone ether ketone ketone (PEKEKK), polyetheretherketone ether ketone (PEEKEK), polyether ether ether ketone (PEEEK), polyether diphenyl ether ketone (PEDEK), or a copolymer or a modification thereof, or a blended resin of two or more kinds thereof.

It is preferable that the polymer alloy has a bicontinuous phase structure having a structural period of 0.001 to 10 $\mu$m. It is also preferable that the polymer alloy has a sea-island structure consisting of island phase and sea phase having a particle diameter of 0.001 to 10 $\mu$m. Good mechanical properties and heat resistance can be achieved by controlling the structure to the bicontinuous phase structure having a structural period of 0.001 to 10 $\mu$m or the sea-island structure having a particle diameter of 0.001 to 10 $\mu$m. It is more preferable that the polymer alloy has the bicontinuous phase structure having a structural period of 0.01 to 5 μm or the sea-island structure consisting of island phase and sea phase having a particle diameter of 0.01 to 5 μm. It is further preferable that the polymer alloy has the bicontinuous phase structure having a structural period of 0.1 to 1 μm or the sea-island structure having a particle diameter of 0.05 to 1 μm.

The bicontinuous phase structure or a dispersion structure is confirmed by identifying a regular periodical structure. For the confirmation, it is necessary to detect a scattering local maximum by a scatter measurement with small-angle X-ray scattering device or a light scattering device as well as a bicontinuous phase structure by optical microscopy observation or transmission electron microscopy observation. Such a confirmation of scattering local maximum by a scatter measurement proves a regular phase separation structure having a certain period, in which period Am [nm] corresponds to a structure period of bicontinuous phase structure or an interparticle distance of dispersion structure. The period can be calculated by the following Formula from wavelength λ [nm] of scattering light in the scattering substance and scattering angle θm [deg] at the scattering local maximum.

$$\Lambda m = (\lambda/2) / \sin (\theta m/2)$$

Even when the structure period of bicontinuous phase structure or the interparticle distance of dispersion structure is within the above-described range, a physical impact might be given to the polymer alloy to break from a coarse part in the structure so that desirable characteristics cannot be achieved. Therefore, it is important that the structure period of bicontinuous phase structure or the interparticle distance of dispersion structured is uniformly set in the polymer alloy. Such a uniformity in the polymer alloy can be evaluated by the above-described small-angle X-ray scattering measurement or light scattering measurement. The small-angle X-ray scattering measurement and the light scattering measurement can provide information of distribution in addition to the size of the structure period of bicontinuous phase structure or the interparticle distance of dispersion structure. Since the small-angle X-ray scattering measurement and the light scattering measurement have different size of phase separation analyzable, any one of the measurements should be chosen according to the size of phase separation of polymer alloy to be analyzed. Specifically, scattering angle θm [deg] at the peak of scattering local maximum in the spectrum provided by the measurement corresponds to the size of the structure period of bicontinuous phase structure or the interparticle distance of dispersion structure while the way of peak extension corresponds to the uniformity of structure. It is preferable that the structural uniformity is high enough to achieve excellent physical properties such as mechanical properties, like our polymer alloy having a local maximum of scattering spectrum provided by the small-angle X-ray scattering measurement or the light scattering measurement.

In our fiber-reinforced thermoplastic resin filament, continuous reinforcing fibers are impregnated with the thermoplastic resin while it may contain filler, other kind of polymer, additive or the like as needed.

The filler contained in our fiber-reinforced thermoplastic resin filament may be any filler used with resin to improve strength, rigidity, heat resistance or dimension stability of fiber-reinforced thermoplastic resin base material or its shaped product. The filler includes a fibrous inorganic filler such as glass fiber, carbon fiber, carbon nanotube, potassium titanate whisker, zinc oxide whisker, aluminum borate whisker, aramid fiber, alumina fiber, silicon carbide fiber, ceramic fiber, asbestos fiber, gypsum fiber and metal fiber, a non-fibrous inorganic filler such as wollastonite, zeolite, sericite, kaolin, mica, talc, clay, pyrophyllite, bentonite, montmorillonite, asbestos, aluminosilicate, alumina, silicon oxide, magnesium oxide, zirconium oxide, titanium oxide, iron oxide, calcium carbonate, magnesium carbonate, dolomite, calcium sulfate, barium sulfate, magnesium hydroxide, calcium hydroxide, aluminium hydroxide, glass bead, ceramic bead, boron nitride, silicon carbide and silica, and a particulate filler of Cu, Al, Ti, Ag, Ni, Zn, Sn, Mo, Fe, Ta, Nb, Si, Cr and alloys thereof. It is possible to contain two or more kinds thereof. The filler may be hollow. It may be the one treated with coupling agent made of compound such as isocyanate-based compound, organosilane-based compound, organotitanate-based compound, organoborane-based compound and epoxy compound. The montmorillonite may be an organic montmorillonite made by cation-exchanging the interlayer ion with organic ammonium salt. The fibrous filler consisting of discontinuous fibers can function without deteriorating the reinforcement effect of reinforcing fiber consisting of continuous fibers.

The additive may be an antioxidant or a thermostabilizer (hindered phenols, hydroquinones, phosphites or substitute thereof, copper halide, iodine compound or the like), a weathering agent (based on resorcinol, salicylate, benzotriazole, benzophenone, hindered amine system), a release agent or a lubricant (aliphatic alcohol, aliphatic amide, aliphatic bis-amide, bis-urea, polyethylene wax or the like), a colorant (cadmium sulfide, phthalocyanine, carbon black or the like), a dye (nigrosin, aniline black or the like), a plasticizer (octyl p-hydroxybenzoate, N-butyl benzene sulfonamide or the like), an antistatic agent (alkyl sulfate-type anion-based antistatic agent, quarternary ammonium salt-type cation-based antistatic agent, non-ionic antistatic agent such as polyoxyethylene sorbitan monostearate, betaine-based amphoteric antistatic agent), a fire-retardant (melamine cyanurate, hydroxide such as magnesium hydroxide and aluminium hydroxide, ammonium polyphosphate, brominated polystyrene, brominated polyphenylene oxide, brominated polycarbonate, brominated epoxy resin, or a combination of these bromine-based fire-retardant and antimony trioxide) or the like. It is possible to contain two or more kinds thereof.

Our fiber-reinforced thermoplastic resin filament can be obtained by impregnating continuous reinforcing fibers with thermoplastic resin. The impregnation may be performed by: a film method in which reinforcing fiber bundles are impregnated with melted thermoplastic film under pressure; a commingling method in which fibrous thermoplastic resin and reinforcing fiber bundles are blended and spun to melt and pressurize the fibrous thermoplastic resin to impregnate the reinforcing fiber bundles with thermoplastic resin; or a powder method in which a reinforcing fiber bundle is impregnated with powdery thermoplastic resin after dispersed among fibers of reinforcing fiber bundle melted and pressurized, or a drawing method in which a reinforcing fiber bundle is immersed and pressurized in melted thermoplastic resin to impregnate the reinforcing fiber bundle with the thermoplastic resin. It is preferable that the impregnation method is the drawing method, capable of preparing fiber-reinforced thermoplastic resin base materials having various thicknesses and various fiber volume contents.

It is preferable that the fiber-reinforced thermoplastic resin filament has a reinforcing fiber proportion of 90% or more to total fibers, wherein absolute value of orientation angle of the reinforcing fiber proportion defined by the following method is 0 to 4 degs with respect to the filament axial direction. The reinforcing fiber proportion of 90% or more having absolute value of orientation angle of 0 to 4 degs can improve strength utilization factor of reinforcing fiber to achieve excellent reinforcement. It is more preferably 0 to 2 degs, preferably 0 to 1 deg. It is preferable that the reinforcing fiber proportion is 93% or more, preferably 95% or more.

(Evaluation method of filament orientation angle)

A 20mm sample of fiber-reinforced thermoplastic resin filament embedded with epoxy resin "EpoKwick (trademark)" made by Buehler company is cured at room temperature for 24 hours. Then, the longitudinal section approximately parallel to the orientation direction of reinforcing fibers of the fiber-reinforced thermoplastic resin filament is polished into 1/2 of filament thickness. And then, the polished surface is applied to an ultra deep color 3D shape measurement microscope VHX-6000 (controller part) / VH-ZST (measurer part) (made by Keyence Corporation) to take a whole image of 20 mm longitudinal section by magnification of 200 times using image link function.

The image angle of the photographed longitudinal section of fiber-reinforced thermoplastic resin filament is adjusted to 0 deg (horizontal) of filament axial direction by using graphics software GIMP. Then the image is binarized by using graphic software Imagej to clarify reinforcing fiber profile. And then, ellipse approximation of the reinforcing fiber is performed with the binarized image by using the ImageJ to calculate orientation angle (Angle) of the ellipse. From raw results of the ellipse approximation, results of less than 50 of major axis (Major) are deleted for reducing noise such as abrasion waste and binarization noise so that only clean results of ellipse approximation of reinforcing fiber are extracted. After converting orientation angle of the extracted results of reinforcing fiber into "-90 degs to +90 degs" format, a histogram of orientation angle proportion is made for absolute values thereof. Besides, the above-described example by using the major axis (Major) might be affected by brightness and noise of photographed image. For clearer discrimination between reinforcing fiber and noise or the like, manual operation may be performed to find an appropriate value with reference to the binarized images.

It is preferable that the fiber-reinforced thermoplastic resin filament has a length of 1 m or more. The length of 1 m or more can achieve continuous forming with thermoplastic resin and greater reinforcing effect because of the continuous reinforcing fibers.

It is preferable that the fiber-reinforced thermoplastic resin filament has a thickness of 0.01 to 3 mm. The thickness of 0.01 mm or more can improve the strength of shaped product made of the fiber-reinforced thermoplastic resin filament. It is preferably 0.1 mm or more. The thickness of 3 mm or less can secure flexibility of the fiber-reinforced thermoplastic resin filament to improve a handling ability at the time of forming shapes. It is preferably 2 mm or less and is more preferably 1 mm or less.

It is preferable that the fiber-reinforced thermoplastic resin filament has a flexural rigidity of $1 \, N \cdot m^2$ or less. The flexural rigidity of $1 \, N \cdot m^2$ or less can secure flexibility of the filament to improve a handling ability. It is preferably $0.1 \, N \cdot m^2$ or less, is more preferably $0.01 \, N \cdot m^2$ or less, and is specifically preferably $0.005 \, N \cdot m^2$ or less.

It is preferable that the fiber-reinforced thermoplastic resin filament has a void ratio of 10% or less in the fiber-reinforced thermoplastic resin filament. The void ratio of 10% or less can exhibit good mechanical properties of the fiber-reinforced thermoplastic resin filament without spoiling mechanical properties of the reinforcing fibers. The void ratio is preferably 5% or less, and is more preferably 2% or less.

(Evaluation method of void ratio)

The void ratio of the fiber-reinforced thermoplastic resin filament is determined by observing a cross section in the thickness direction of the fiber-reinforced thermoplastic resin filament as follows. Samples prepared by embedding fiber-reinforced thermoplastic resin filament with epoxy resin "EpoKwick (trademark)" made by Buehler company cured at room temperature for 24 hours are polished to make a cross section in the thickness direction of the fiber-reinforced thermoplastic resin filament well observed. The polished samples are photographed at magnification of 300 times with an ultra deep color 3D shape measurement microscope VHX-6000 (controller part) / VH-ZST (measurer part) (made by Keyence Corporation). The scale of images includes a whole section of the fiber-reinforced thermoplastic resin filament. Total areas of cross section and voids of the fiber-reinforced thermoplastic resin filament are measured with the taken images to calculate an impregnation rate by Formula 3.

Void ratio [%] = 100 x (total void area) / (total area of fiber-reinforced thermoplastic resin filament)　　　(Formula 3)

It is preferable that the fiber-reinforced thermoplastic resin filament for 3D printer has 90% or more of an average value D of dispersion parameter d [%] defined as follows. The average value D of 90% or more can reduce variation of mechanical properties of the fiber-reinforced thermoplastic resin filament.

(Calculation of average value D of dispersion parameter d [%])

(i) A cross section perpendicular to the filament axial direction is photographed to cover a whole cross section of the fiber-reinforced thermoplastic resin filament.
(ii) An image of the whole cross section is divided into square units each having a side length defined by Formula 4.
(iii) Dispersion parameter d [%] is calculated by Formula 5.
(iv) Steps (i) to (iii) are repeated at each section to calculate average value D of dispersion parameter d.

$$\text{(Formula 4)} \quad t = 2.5a \quad (a: \text{fiber diameter}, t: \text{side length of unit})$$

Dispersion parameter d [%] = (the number of units including reinforcing fibers within evaluation range) / (the number of units including a part of filament within evaluation range) x 100　　　(Formula 5)

(Evaluation method of average value D of dispersion parameter d [%])

A sample of fiber-reinforced thermoplastic resin filament embedded with "EpoKwick (trademark)" made by Buehler company is cured at room temperature for 24 hours and then the cross section perpendicular to the orientation direction of reinforcing fibers of the fiber-reinforced thermoplastic resin filament is polished to take an image with an ultra deep color 3D shape measurement microscope VHX-6000 (controller part) / VH-ZST (measurer part) (made by Keyence Corporation) at magnification of 300 times. The scale of images includes a whole section of the fiber-reinforced thermoplastic resin filament. The photographed image of cross section of the fiber-reinforced thermoplastic resin filament is divided into approximately square units having a side length satisfying Formula 4 without overlapping mutually for an image analysis with Imagej. The number of approximately square units including reinforcing fibers is counted by the image analysis in turn to calculate dispersion parameter d by Formula 5. The above-described image analysis is performed to count the number of units including reinforcing fibers per the number of units including a part of filament within the sectioned approximately square units. The image is basically binarized by a discrimination analysis although the binarization can be performed by manually comparing the photographed images. Even a unit partially including a reinforcing fiber is counted as including reinforcing fibers while another unit including two or more reinforcing fibers is counted as the same. Different fields of view of 20 or more in a polished surface of the fiber-reinforced thermoplastic resin filament are photographed to calculate average value D of dispersion parameter d measured from each image of cross section of fiber-reinforced thermoplastic resin filament, so that reinforcing fiber distribution in the fiber-reinforced thermoplastic resin filament can be evaluated quantitatively.
According to Formula 4, the unit size is defined by the reinforcing fiber diameter observed. When the unit size is less than the value calculated by Formula 4, the dispersion parameter might be converged with volume content and fail to express the dispersibility exactly. When the unit size is more than the value calculated by Formula 4, the dispersion parameter might be constant regardless of dispersion quality and fail to express the dispersibility correctly. Therefore, it is preferable that the unit size satisfies Formula 4.
The coefficient of variance of dispersion parameters d which have been used to calculate average value D can be calculated by Formula 6. When the coefficient of variance is more than 4%, the reinforcing fiber density might greatly change among fields in a fiber-reinforced thermoplastic resin filament. Therefore, it is preferable that the coefficient of variance is 4% or less, preferably 3% or less.

Coefficient of variance [%] = (standard deviation of dispersion parameter d) / (average value of dispersion parameter d) x 100　　　(Formula 6)

As described above, our fiber-reinforced thermoplastic resin filament can be improved in strength utilization factor of reinforcing fiber to achieve excellent reinforcement when the reinforcing fiber proportion of 90% or more having absolute value of orientation angle of 0 to 4 degs, the reinforcing fiber proportion being defined as described above with respect to the filament axial direction. It is more preferable that the absolute value of orientation angle is 0 to 2 degs, preferably 0 to 1 deg. It is preferable that the reinforcing fiber proportion is 93% or more, preferably 95% or more.

A shaped product can be made by forming a laminate of any configuration of one or more of the fiber-reinforced thermoplastic resin filaments as heating and/or pressurizing as needed.

The heating and/or pressurizing process may be performed by: a press forming method in which any configuration of forming material laminate is pressurized in a die or between pressing plates; an autoclave forming method to pressurize and heat any configuration of forming material laminate in an autoclave; a bagging forming method to pressurize and heat any configuration of forming material laminate wrapped with film and vacuumed inside at atmospheric pressure in an oven; a wrapping tape method to wind a tape around the continuous fiber-reinforced thermoplastic resin of any configuration with tension to be heated in an oven; an inner pressure forming method to inject gas or liquid into cores provided in a die containing any configuration of continuous reinforcing-fiber thermoplastic resin; or a 3D printing method to form a three-dimensional shape of heated and pressurized forming material which is fused and laminated. It is preferable to employ a 3D printing method suitable for forming a complicated shape.

The fiber-reinforced thermoplastic resin filament and its shaped product excellent in characteristics can be applied to airplane parts, motor parts, electric/electronic parts building materials, containers, daily necessities, daily articles and sanitary goods. It is preferable that the fiber-reinforced thermoplastic resin filament and its shaped product are applied to parts demanding stable mechanical properties, such as airplane engine peripheral parts, airplane exterior parts, automobile body parts, vehicle frame, automobile engine peripheral parts, automobile underhood parts, automobile gear parts, automobile interior parts, automobile exterior parts, intake or exhaust parts and engine cooling water parts, automobile electric component parts, or electric/electronic parts. Specifically, the fiber-reinforced thermoplastic resin filament and its shaped product are applied to airplane engine peripheral parts such as fan blades, airplane parts such as landing gear pod, winglet, spoiler, edge, ladder, elevator, fairing and rib, automobile body parts such as sheets, front body, underbody, pillars, members, frames, beams, supports, rails and hinges, automobile engine peripheral parts such as engine cover, air intake pipe, timing belt cover, intake manifold, filler cap, throttle body and cooling fan, automobile underhood parts such as top and base of cooling fan or radiator tank, cylinder head cover, oil pan, brake piping, fuel tube and exhaust gas system parts, automobile gear parts such as gear, actuator, bearing retainer, bearing cage, chain guide and chain tensioner, automobile interior parts such as shift lever bracket, steering lock bracket, key cylinder, door inner handle, door handle cowl, indoor mirror bracket, air-conditioner switch, instrumental panel, console box, glove box, steering wheel and trim, automobile exterior parts such as front fender, rear fender, fuel lid, door panel, cylinder head cover, door mirror stay, tailgate panel, license garnish, roof rail, engine mount bracket, rear garnish, rear spoiler, trunk lid, rocker molding, molding, lamp housing, front grille, mudguard and side bumper, intake or exhaust parts such as air intake manifold, intercooler inlet, turbo charger, exhaust pipe cover, inner Bush, bearing retainer, engine mount, engine head cover, resonator and throttle body, engine cooling water system parts such as chain cover, thermostat housing, outlet pipe, radiator tank, alternator and delivery pipe, automobile electric component parts such as connector, wire harness connector, motor parts, lamp socket, sensor in-vehicle switch and combination switch, electric/electronic parts such as generator, motor, transformer, converter, voltage regulator, rectifier, resistor, inverter, relay, contact point for power, breaker, switch, knife switch, multipole rod, motor case, TV housing, note PC housing and internal parts, CRT display housing and internal parts, printer housing and internal parts, cell-phone housing and internal parts of cell-phone, and mobile PC or handheld mobile gear, electric parts such as IC, LED-adaptive housing, capacitor seat plate, fuseholder, gears, cases and cabinets, electronic parts such as connector, SMT-adaptive connector, card connector, jack, coil, coil bobbin, sensor, LED lamp, socket, resistor, relay, relay case, reflector, small switch, power supply parts, coil bobbin, capacitor, variable capacitor case, optical pick-up chassis, oscillator, terminal boards, transformers, plugs, printed circuit boards, tuners, speakers, microphones, headphones, small size motor, magnetic head base, power module, Si power module, SiC power module, semiconductor, liquid crystal, FDD carriage, FDD chassis, a motor brush holder, transformer material, parabolic antenna, computer parts, or the like.

[Examples]

Hereinafter, our invention will be explained in more detail with reference to Examples although our invention is not limited thereto. Characteristics are evaluated by the following methods in Examples and Comparative examples.

1. Coefficient of static friction

A coefficient of static friction is measured from angle θ at which a fiber-reinforced thermoplastic resin filament placed orthogonally on another filament begins to slide as follows.

Two 20mm pieces of the fiber-reinforced thermoplastic resin filament have been attached to a rectangular plate having a size of 20mm length x 15mm width x 0.5-2 mm thickness, the filament being placed along the length. The filaments have been placed such that the distance between outer ends becomes 15mm. Two sets of the above-described rectangular plate with sample have been prepared.

One rectangular plate with sample are attached to the inclination-angle adjustment stage, the sample being placed on upside with its axial direction along the inclination direction of the stage. The other rectangular plate are placed on the one rectangular plate with its axial direction perpendicular to the axial direction of the sample of the one filament.

The inclination-angle adjustment stage is inclined according to JIS P8147:2010 at inclination speed of 3.0 deg/s or less to measure angle $\theta$ at which the rectangular plate begins to slide. This measurement is performed five times or more. The measured angles $\theta$ are averaged to calculate a representative value of $\tan\theta$ to determine a coefficient of static friction of the fiber-reinforced thermoplastic resin filament.

2. Surface roughness

A surface roughness of fiber-reinforced thermoplastic resin filament is determined according to JIS B0601:2013 by using a contact-type surface roughness meter (SURFCOM 480A (TOKYO SEIMITSU CO., LTD.) as follows. After performing calibration with a standard test piece, the level adjustment stage is set to the measurement stage base of the surface roughness meter. The selected measurement condition: measurement type of Ra; measurement speed of 0.3mm/s; cut-off level of 0.8; evaluation length of 4.0; inclination amendment of straight line; filter of Gaussian and; cut-off ratio of 300 for $\lambda$s filter.

A 30mm cut sample of fiber-reinforced thermoplastic resin filament is attached to the level adjustment stage with its axial direction along the measurement direction for level adjustment. The MEASURE switch is turned ON to record measurement result of Ra in the axial direction of the fiber-reinforced thermoplastic resin filament. The five measured values at randomly-selected measurement points are averaged to calculate representative Ra.

3. Fiber volume content (Vf)

The volume of the reinforcement fiber content of the fiber reinforcement thermoplastic resin filament measured it as follows and evaluated it. A sample of fiber-reinforced thermoplastic resin filament is embedded with epoxy resin, and then is polished to expose a cross section perpendicular to the axial direction of fiber-reinforced thermoplastic resin filament for good observation. The polished sample is photographed at magnification of 300 times with an ultra deep color 3D shape measurement microscope VHX-9500 (controller part)/VH-100R (measurer part) (made by Keyence Corporation).

In the photographed image of cross section, a ratio of [total reinforcing fiber area] to [total area of region surrounded by the outer edge of fiber-reinforced thermoplastic resin filament] is measured to calculate a fiber volume content of reinforcing fiber by the following Formula 1.

Fiber volume content of reinforcing fiber [%] = 100 x (total reinforcing fiber area) / (total area of fiber-reinforced thermoplastic resin filament)    (Formula 1)

4. Thickness

Thicknesses of the fiber-reinforced thermoplastic resin filament in each of Examples and Comparative examples are measured by a vernier caliper placed perpendicular to the axial direction to find the minimum distance. The minimum distances are measured at randomly-selected 20 measurement points for each sample. The measured minimum distances are averaged to calculate a representative thickness.

5. Resin rich layer thickness

A resin rich layer thickness of the fiber-reinforced thermoplastic resin filament in each of Examples and Comparative examples is determined to be evaluated as follows. A sample of fiber-reinforced thermoplastic resin filament is embedded with epoxy resin, and then is polished to expose a cross section perpendicular to the axial direction of fiber-reinforced thermoplastic resin filament for good observation. The polished sample is photographed at magnification of 300 times with an ultra deep color 3D shape measurement microscope VHX-9500 (controller part)/VH-100R (measurer part) (made by Keyence Corporation).

In the photographed section image, a straight line is drawn between a randomly-selected point on the outer edge and the gravity center of the fiber-reinforced thermoplastic resin filament. The distance between the gravity center and the intersection of the straight line and the interface of resin rich layer is defined as resin rich layer thickness. When the interface of resin rich layer is not clear, the intersection may be set at the point where the straight line intersects reinforcing fiber closest to the interface in the core section. The distances measured at five measurement points in each cross section are averaged to calculate a representative resin rich layer thickness.

6. Impregnation characteristics

Cross sections of the fiber-reinforced thermoplastic resin filaments obtained in Examples and Comparative examples are observed in the thickness direction as follows. Samples prepared by embedding fiber-reinforced thermoplastic resin filament with epoxy resin "EpoKwick (trademark)" made by Buehler company cured at room temperature for 24 hours are polished to make a cross section in the thickness direction of the fiber-reinforced thermoplastic resin filament well observed. The polished samples are photographed at magnification of 300 times with an ultra deep color 3D shape measurement microscope VHX-6000 (controller part) / VH-ZST (measurer part) (made by Keyence Corporation). The scale of images includes a whole section of the fiber-reinforced thermoplastic resin filament. Total areas of cross section and voids of the fiber-reinforced thermoplastic resin filament are measured with the taken images to calculate an impregnation rate by Formula 3.

Void ratio [%] = 100 x (total void area) / (total area of fiber-reinforced --> thermoplastic resin filament)     (Formula 3)

7. Uniformity

(i) A cross section perpendicular to the filament axial direction is photographed to cover a whole cross section of the fiber-reinforced thermoplastic resin filament.
(ii) The whole image of cross section image is divided into square units each having a side length defined by Formula 4.
(iii) Dispersion parameter d [%] is calculated by Formula 5.
(iv) Steps (i) to (iii) are repeated at each section to calculate average value D of dispersion parameter d.

$$\text{(Formula 4)} \quad t = 2.5a \quad (a: \text{fiber diameter}, \; t: \text{side length of unit})$$

Dispersion parameter d [%] = (the number of units including reinforcing fibers within evaluation range) / (the number of units including a part of filament within evaluation range) x 100     (Formula 5)

(Evaluation method)

A sample of fiber-reinforced thermoplastic resin filament embedded with "EpoKwick (trademark)" made by Buehler company is cured at room temperature for 24 hours and then the cross section perpendicular to the orientation direction of reinforcing fibers of the fiber-reinforced thermoplastic resin filament is polished to take an image with an ultra deep color 3D shape measurement microscope VHX-6000 (controller part) / VH-ZST (measurer part) (made by Keyence Corporation) at magnification of 300 times. The scale of images includes a whole section of the fiber-reinforced thermoplastic resin filament. The photographed image of cross section of the fiber-reinforced thermoplastic resin filament is divided into approximately square units having a side length satisfying Formula 4 without overlapping mutually for an image analysis with Imagej. The number of approximately square units including reinforcing fibers is counted by the image analysis in turn to calculate dispersion parameter d by Formula 5.
Different fields of view of 20 or more in a polished surface of the fiber-reinforced thermoplastic resin filament are photographed to calculate average value D from the obtained dispersion parameters d and coefficient of variance of dispersion parameters d used for calculation of average value D.

8. Straightness

The 20mm sample of fiber-reinforced thermoplastic resin filament obtained in each of Examples and Comparative examples are embedded with epoxy resin "EpoKwick (trademark)" made by Buehler company to be cured at room temperature for 24 hours. Then, the longitudinal section approximately parallel to the orientation direction of reinforcing fibers of the fiber-reinforced thermoplastic resin filament is polished into 1/2 of filament thickness. And then, the polished surface is applied to an ultra deep color 3D shape measurement microscope VHX-6000 (controller part) / VH-ZST (measurer part) (made by Keyence Corporation) to take a whole image of 20 mm longitudinal section by magnification of 200 times using image link function.

The image angle of the photographed longitudinal section of fiber-reinforced thermoplastic resin filament is adjusted to 0 deg (horizontal) of filament axial direction by using graphics software GIMP. Then the image is binarized by using graphic software Imagej to clarify reinforcing fiber profile. And then, ellipse approximation of the reinforcing fiber is performed with the binarized image by using the ImageJ to calculate orientation angle (Angle) of the ellipse. From raw results of the ellipse approximation, results of less than 50 of major axis (Major) are deleted for reducing noise such as abrasion waste and binarization noise so that only clean results of ellipse approximation of reinforcing fiber are extracted. After converting orientation angle of the extracted results of reinforcing fiber into "-90 degs to +90 degs" format, a histogram of orientation angle proportion is made for absolute values thereof.

9. OUT/IN ratio

An OUT/IN ratio is determined to be evaluated as follows for evaluating the ratio of reinforcing fiber volume content of outermost layer and core section of the fiber-reinforced thermoplastic resin filament obtained in each of Examples and Comparative examples.

A sample of fiber-reinforced thermoplastic resin filament is embedded with epoxy resin, and then is polished to expose a cross section perpendicular to the axial direction of fiber-reinforced thermoplastic resin filament for good observation. The polished sample is photographed at magnification of 300 times with an ultra deep color 3D shape measurement microscope VHX-9500 (controller part)/VH-100R (measurer part) (made by Keyence Corporation).

In the photographed image of cross section, each fiber volume content of reinforcing fiber is calculated by Formula 1 for outer or inner region with respect to the parallel curved line shifted inside by 15% of filament thickness from the outer edge. The OUT/IN ratio of reinforcing fiber is averaged among values determined by Formula 2 with 3 images of cross sections of the filament.

Fiber volume content of reinforcing fiber [%] = 100 x (total reinforcing fiber area) / (total area of fiber-reinforced thermoplastic resin filament)     (Formula 1)

OUT/IN ratio [%] = 100 x (outer fiber volume content of reinforcing fiber in outer periphery) / (inner fiber volume content of reinforcing fiber in region other --> than outer periphery)     (Formula 2)

10. Flexural rigidity

A flexural rigidity is determined as follows for the fiber-reinforced thermoplastic resin filament obtained in each of Examples and Comparative examples.

$$\text{(Formula 8)} \quad \text{Flexural rigidity} = E \times I$$

    E: flexural elastic modulus of fiber-reinforced thermoplastic resin filament
    I: second moment of area

The flexural elastic modulus of fiber-reinforced thermoplastic resin filaments is determined according to JIS K 7074(2012). The filaments are bent in the axial direction for the determination.

11. Handling ability

A handling ability of the fiber-reinforced thermoplastic resin filament obtained in each of Examples and Comparative examples is evaluated into the two levels between "Good" and "NG" according to criteria of fracture/bend of the fiber-reinforced thermoplastic resin filaments wound around a roll having 150mm of inner diameter.

    Good: without fracture and bend
    NG: with fracture or bend

12. Formability by 3D printer

(1) Formability of circular section filament

A formability of circular section fiber-reinforced thermoplastic resin filament obtained in each of Examples and Comparative examples is evaluated into the two levels between "Good" to pass and "NG" as follows according to visual observation of cohesion between filaments in forming at 30 + melting point (of thermoplastic resin constituting the filament) °C by using a commercially available FDM type 3D printer (UltimakerS5 made by Ultimaker company). Besides, commercially available nozzles for 3D printer have been further processed to adjust the diameter of tip discharge port to the thickness (of fiber-reinforced thermoplastic resin filament obtained in each of Examples and Comparative example) + 0.1mm.

Good: Good cohesion with no gaps observed between filaments after forming
NG: Poor cohesion with clear gaps between filaments after forming

(2) Formability of rectangular section filament

A rectangular section fiber-reinforced thermoplastic resin filament is heated with laser by heating the filament with a device similar to the AFP device to visually observe cohesion between filaments in forming while pressing with a pressuring roller at 30 + melting point (of thermoplastic resin constituting the filament) °C. The evaluation is performed into the two levels between "Good" to pass and "NG" as follows.

Good: Good cohesion with no gaps observed between filaments after forming
NG: Poor cohesion with clear gaps between filaments after forming

13. Satisfactory processability by 3D printer

(1) Satisfactory processability of circular section filament

A satisfactory processability of circular section fiber-reinforced thermoplastic resin filament obtained in each of Examples and Comparative examples is evaluated according to visual observation of plug in forming 2m length of filament at 30 + melting point (of thermoplastic resin constituting the filament) °C by using a commercially available FDM type 3D printer (UltimakerS5 made by Ultimaker company). The above-described test is performed 20 times to evaluate into the two levels between "Good" to pass and "NG" as follows. Besides, commercially available nozzles for 3D printer have been further processed to adjust the diameter of tip discharge port to the thickness (of fiber-reinforced thermoplastic resin filament obtained in each of Examples and Comparative example) + 0.1mm.

Good: 0 to 2 times of nozzle clogging
NG: 3 times or more of nozzle clogging

(2) Satisfactory processability of rectangular section filament

A rectangular section fiber-reinforced thermoplastic resin filament is heated with laser by heating the filament with a device similar to the AFP device to visually observe slippage of filament on the compaction roller in forming while pressing with a pressuring roller at 30 + melting point (of thermoplastic resin constituting the filament) °C. The above-described test is performed 20 times to evaluate into the two levels between "Good" to pass and "NG" as follows.

Good: slippage of 10mm or less in forming 10m length
NG: slippage of 10mm or more in forming 10m length

[Raw material]

The following raw materials are used in Examples and Comparative examples.

(Carbon fiber bundle)

Carbon fiber 1: "TORAYCA (trademark)" T800-6K made by Toray Industries, Inc.
Carbon fiber 2: "TORAYCA (trademark)"T700-12K made by Toray Industries, Inc.
Carbon fiber 3: "TORAYCA (trademark)"T300-1K made by Toray Industries, Inc.

(Thermoplastic resin)

Thermoplastic resin 1: Polyamide (PA6) resin "AMILAN (trademark)" made by Toray Industries, Inc.
Thermoplastic resin 2: Polyphenylene sulfide (PPS) resin "TORELINA (trademark)" made by Toray Industries, Inc.
Thermoplastic resin 3: Polycarbonate (PC) resin "SD POLYCA (trademark)" made by Sumitomo Bakelite Co., Ltd.
Filler 1: Filler beads USB-0020L made by Unitika Ltd., Particle size: 0-20$\mu$m
Filler 2: Spherical alumina DAM-20 made by Denka Company Limited, Particle size (d50): 24.6$\mu$m
Filler 3: Spherical alumina DAM-05 made by Denka Company Limited, Particle size (d50): 6.8$\mu$m

[Example 1]

A carbon fiber bundle was continuously unwound off the bobbin around which carbon fiber 1 had been wound through a yarn guide. The continuously unwound carbon fiber bundle was impregnated with thermoplastic resin 1 supplied constantly from a filled feeder into an impregnation die. The carbon fiber bundle impregnated in the impregnation die was continuously drawn out with a draw roller at 1m/min of draw speed through a nozzle of the impregnation die. The drawn-out carbon fiber bundle was cooled down with a cooling die to solidify the thermoplastic resin 1 to make a core section of fiber-reinforced thermoplastic resin filament wound by a winder.

The core section of fiber-reinforced thermoplastic resin filament was fed out through yarn guide. After thermoplastic resin 1 constantly supplied from a filled feeder was applied to the fiber-reinforced thermoplastic resin filament in the application die base material, the fiber-reinforced thermoplastic resin filament provided with resin layer formed around the core section in the application die was continuously taken off with a take-off roll at take-off speed of 5m/min through the nozzle of application die. The carbon fiber bundle taken off was cooled through the cooling die to solidify thermoplastic resin 1 so that the fiber-reinforced thermoplastic resin filament was wound by the winder.

The obtained fiber-reinforced thermoplastic resin filament for 3D printer had a circular cross section with unidirectionally-oriented reinforcing fibers.

Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Example 2]

A fiber-reinforced thermoplastic resin filament was prepared by the same method as Example 1, except that carbon fiber 2 was used while the fiber volume content and the filament cross section shape were changed to 41% and rectangle. Table 1 shows characteristics and evaluation results of the obtained fiber-reinforced thermoplastic resin filament, in which coefficient of friction, surface roughness Ra, handling ability and reinforcing fiber straightness are excellent.

[Example 3]

A fiber-reinforced thermoplastic resin filament was prepared by the same method as Example 1, except that thermoplastic resin 2 was used. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Example 4]

A fiber-reinforced thermoplastic resin filament was prepared by the same method as Example 1, except that thermoplastic resin 3 was used. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Example 5]

A fiber-reinforced thermoplastic resin filament was prepared by the same method as Example 1, except that filler 1 was blended with thermoplastic resin 1 supplied constantly from the filled feeder. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Comparative example 1]

A carbon fiber bundle was continuously unwound off the bobbin around which carbon fiber 1 had been wound through a yarn guide. The continuously unwound carbon fiber bundle was impregnated with thermoplastic resin 1 supplied constantly from a filled feeder into an impregnation die. The carbon fiber bundle impregnated in the impregnation die was continuously drawn out with a draw roller at 1m/min of draw speed through a nozzle of the impregnation die. The drawn-out carbon fiber bundle was cooled down with a cooling die to solidify the thermoplastic resin 1 to make a core section of fiber-reinforced thermoplastic resin filament wound by a winder. The obtained fiber-reinforced thermoplastic resin filament for 3D printer had a circular cross section with unidirectionally-oriented reinforcing fibers. Table 1 shows the results, in which coefficient of friction, surface roughness Ra and satisfactory processability are poor although handling ability, void ratio, uniformity of reinforcing fibers, reinforcing fiber straightness and formability are excellent.

[Example 6]

A fiber-reinforced thermoplastic resin filament was prepared by the same method as Example 1, except that filler 2 was blended with thermoplastic resin 1 supplied constantly from the filled feeder. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Comparative example 2]

A fiber-reinforced thermoplastic resin filament was prepared by the same method as Comparative example 1, except that thermoplastic resin 2 was used. Table 1 shows characteristics and evaluation results of the obtained fiber-reinforced thermoplastic resin filament, in which coefficient of friction, surface roughness Ra and satisfactory processability are poor although handling ability, void ratio, uniformity of reinforcing fibers, reinforcing fiber straightness and formability are excellent.

[Example 7]

As shown in Fig. 8, after the filament prepared in Example 2 was drawn out from the nozzle of impregnation die 18, the filament was inserted through shaft hole 20 of bobbin 19 around which carbon fiber 3 to be used as covering yarn was wound. The bobbin was set rotatable around the shaft.

The filament part after passing through shaft hole 20 was heated by infrared heater 21 and the covering yarn was wound closely around the melted filament surface. The number of twists of the covering yarn wound around the filament was set to 20 T/min by adjusting rotation speed of bobbin to 20 round/min with respect to filament feeding speed of 1m/min.

Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Comparative example 3]

In Example 7, the surface of covering yarn wound around the prepared filament was heated by an infrared heater, where filler 2 was dispersed to be adhered to the filament surface layer. Table 1 shows characteristics and evaluation results of the obtained fiber-reinforced thermoplastic resin filament, in which coefficient of friction and satisfactory processability are poor although handling ability, void ratio, uniformity of reinforcing fibers, reinforcing fiber straightness, formability and surface roughness Ra are excellent.

[Example 8]

A fiber-reinforced thermoplastic resin filament was prepared by the same method as Example 7, except that the number of twists of the covering yarn wound around the filament was set to 3 T/min by adjusting rotation speed of bobbin to 3 round/min with respect to filament feeding speed of 1m/min. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Example 9]

In Example 7, the surface of covering yarn wound around the prepared filament was heated by an infrared heater, where filler 3 was dispersed to be adhered to the filament surface layer. Table 1 shows characteristics and evaluation results of the obtained fiber-reinforced thermoplastic resin filament, in which handling ability, void ratio, uniformity of reinforcing fibers, reinforcing fiber straightness, formability, surface roughness Ra, coefficient of friction and satisfactory processability are excellent.

[Example 10]

A fiber-reinforced thermoplastic resin filament was prepared by the same method as Example 1, except that the resin rich layer thickness was thinner. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Example 11]

A fiber-reinforced thermoplastic resin filament was prepared by the same method as Example 2, except that the resin rich layer thickness was thinner. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Example 12]

A fiber-reinforced thermoplastic resin filament was prepared by the same method as Example 3, except that the resin rich layer thickness was thinner. Table 1 shows characteristics and evaluation results of the obtained fiber-reinforced thermoplastic resin filament, in which coefficient of friction, surface roughness Ra, handling ability, formability, satisfactory processability and reinforcing fiber straightness are excellent.

[Table 1]

| | | Example 1 | Example 2 | Example 3 | Example 4 | Example 5 | Comparative example 1 | Example 6 | Comparative example 2 | Example 7 | Comparative example 3 | Example 8 | Example 9 | Example 10 | Example 11 | Example 12 |
|---|---|---|---|---|---|---|---|---|---|---|---|---|---|---|---|---|
| Raw materials | Reinforcing fiber | CF | CF | CF | CF | CF | CF | CF | CF | CF | CF | CF | CF | CF | CF | CF |
| | Resin | PA6 | PA6 | PPS | PC | PA6 | PA6 | PA6 | PPS | PA6 | PPS | PA6 | PPS | PA6 | PA6 | PPS |
| Filament | Thickness [mm] | 0.74 | 0.72 | 0.75 | 0.72 | 0.73 | 0.61 | 0.66 | 0.62 | 0.83 | 0.87 | 0.69 | 0.85 | 0.65 | 0.66 | 0.67 |
| | Width [mm] | - | 1.6 | - | - | - | - | - | - | - | - | - | - | - | - | - |
| | Resin Rich layer thickness [mm] | 0.05 | 0.05 | 0.05 | 0.05 | 0.05 | - | - | - | 0.05 | 0.05 | 0.03 | 0.05 | 0.02 | 0.03 | 0.03 |
| | Coefficient of static friction | 0.41 | 0.38 | 0.22 | 0.31 | 0.55 | 0.18 | 0.48 | 0.15 | 0.45 | 0.83 | 0.37 | 0.74 | 0.51 | 0.47 | 0.35 |
| | Surface roughness [Ra] | 0.64 | 1.21 | 0.56 | 0.83 | 1.56 | 0.46 | 10.8 | 0.38 | 11.6 | 12.3 | 10.2 | 10.9 | 0.91 | 1.45 | 0.78 |
| | Fiber volume content [%] | 32 | 41 | 35 | 30 | 28 | 58 | 52 | 55 | 34 | 31 | 44 | 32 | 47 | 44 | 45 |
| | Length[m] | >10 | >10 | >10 | >10 | >10 | >10 | >10 | >10 | >10 | >10 | >10 | >10 | >10 | >10 | >10 |
| | Cross section shape | Circle | Rectangle | Circle | Circle | Circle | Circle | Circle | Circle | Circle | Circle | Circle | Circle | Circle | Rectangle | Circle |
| | Void ratio | 1.2 | 1.5 | 1.1 | 1.3 | 1.2 | 1.4 | 1.2 | 1.1 | 1.3 | 1.1 | 1.4 | 1.1 | 1.3 | 1.4 | 0.9 |
| | Straightness | 96 | 95 | 93 | 92 | 94 | 96 | 94 | 91 | 92 | 91 | 92 | 91 | 94 | 93 | 92 |
| | D: Average dispersion parameter | 86 | 84 | 88 | 85 | 89 | 96 | 94 | 93 | 91 | 89 | 93 | 90 | 92 | 91 | 93 |

(continued)

| | | Example 1 | Example 2 | Example 3 | Example 4 | Example 5 | Comparative example 1 | Example 6 | Comparative example 2 | Example 7 | Comparative example 3 | Example 8 | Example 9 | Example 10 | Example 11 | Example 12 |
|---|---|---|---|---|---|---|---|---|---|---|---|---|---|---|---|---|
| | d: Coefficient of Variance of dispersion parameter | 3.4 | 3.1 | 3.0 | 3.7 | 3.9 | 2.1 | 2.1 | 1.4 | 2.4 | 2.3 | 2.7 | 2.8 | 2.8 | 3.3 | 2.4 |
| | OUT/IN ratio [%] | 12 | 11 | 10 | 13 | 12 | 96 | 95 | 97 | 92 | 96 | 42 | 94 | 53 | 47 | 44 |
| | Twist [T/m] | None | None | None | None | None | None | None | None | 20 | 20 | 3 | 20 | None | None | None |
| | Filler | None | None | None | None | Glass | None | Alumina | None | None | Alumina | None | Alumina | None | None | None |
| Evaluation | Flexural rigidity | 0.0006 | 0.0027 | 0.0007 | 0.0006 | 0.0005 | 0.0011 | 0.0010 | 0.0010 | 0.0006 | 0.0006 | 0.0008 | 0.0006 | 0.0006 | 0.0026 | 0.0007 |
| | Handling ability | Good | Good | Good | Good | Good | Good | Good | Good | Good | Good | Good | Good | Good | Good | Good |
| | Formability | Good | Good | Good | Good | Good | Good | Good | Good | Good | Good | Good | Good | Good | Good | Good |
| | Satisfactory processability | Good | Good | Good | Good | Good | NG | Good | NG | Good | NG | Good | Good | Good | Good | Good |

Industrial Applications of the Invention

Our fiber-reinforced thermoplastic resin filament can be formed into a desirable shape by a method such as press forming method and 3D printing method. The 3D printing method needs to achieve both a good reinforcing effect and handling ability at the time of forming and is therefore suitable for a forming method of our fiber-reinforced thermoplastic resin filament. Our shaped product obtained by forming the fiber-reinforced thermoplastic resin filament is applicable to airplane engine peripheral parts, airplane interior parts, airplane exterior parts, automobile parts such as vehicle frame, automobile engine peripheral parts, automobile underhood parts, automobile gear parts, automobile interior parts, automobile exterior parts, intake or exhaust parts, engine cooling water parts and automobile electric component parts, or electric/electronic parts such as LED reflector and SMT connector.

Explanation of symbols

1: circular-cross section filament
2: oval-cross section filaments
3: modified-cross section filament (1)
4: modified-cross section filament (2)
5: rectangular plate with sample (upper)
6,7,9,10: fiber-reinforced thermoplastic resin filament
8: rectangular plate with sample (lower)
11: inclination-angle adjustment stage
12,17: filament
13: thickness
14: outer edge
15: parallel curved line shifted inside by 15% of thickness from outer edge
16: outer periphery
18: impregnation die
19: bobbin
20: shaft hole
21: infrared heater

**Claims**

1.  A fiber-reinforced thermoplastic resin filament comprising a plurality of continuous reinforcing fibers impregnated with at least one kind of resin selected from a group consisting of polyphenylene sulfide resin (PPS), polyarylene ether ketone resin (PAEK), polyamide (PA), polycarbonate (PC), polyetherimide resin (PEI), polyether sulfone resin (PES) and liquid crystalline polymer resin (LCP), wherein

    the reinforcing fibers have an OUT/IN ratio of 0 to 90 % and the filament has a surface coefficient of static friction of 0.20 to 0.80,
    the OUT/IN ratio being defined as a ratio of an outer fiber volume content of the reinforcing fibers in an outer periphery having a depth of 15% of filament thickness from an outer edge of the filament per an inner fiber volume content of the reinforcing fibers in a region other than the outer periphery.

2.  The fiber-reinforced thermoplastic resin filament according to claim 1, wherein the coefficient of static friction is 0.20 to 0.40.

3.  The fiber-reinforced thermoplastic resin filament according to claim 1, wherein the reinforcing fibers have the OUT/IN ratio of 10 to 60%.

4.  The fiber-reinforced thermoplastic resin filament according to claim 1, having a surface roughness Ra of 0.50 to 20 μm.

5.  The fiber-reinforced thermoplastic resin filament according to claim 1, wherein an average value D of dispersion parameter d [%] determined by the following steps (i) to (iv) is 90% or more.

(i) A cross section perpendicular to a filament axial direction is photographed to cover a whole cross section of the fiber-reinforced thermoplastic resin filament.
(ii) An image of the whole cross section is divided into square units each having a side length defined by Formula 4.
(iii) The dispersion parameter d [%] is calculated by Formula 5.
(iv) Steps (i) to (iii) are repeated at a plurality of cross sections to calculate average value D of the dispersion parameter d [%].
(Formula 4) t = 2.5a (a: fiber diameter, t: side length of unit) Dispersion parameter d [%] = (the number of units including reinforcing fibers within evaluation range) / (the number of units including a part of filament within evaluation range) x 100 (Formula 5)

6. The fiber-reinforced thermoplastic resin filament according to claim 5, wherein a plurality of the dispersion parameters d used for calculating the average value D have a coefficient of variance of 4% or less.

7. The fiber-reinforced thermoplastic resin filament according to claim 1, wherein a covering yarn having twists of 50 T/m or less is wound around the reinforcing fiber.

8. The fiber-reinforced thermoplastic resin filament according to claim 7, having a surface roughness Ra of 10 to 20 $\mu$m.

9. The fiber-reinforced thermoplastic resin filament according to claim 1, wherein the thermoplastic resin contains a filler.

10. The fiber-reinforced thermoplastic resin filament according to claim 1, wherein the reinforcing fibers have the OUT/IN ratio of 15 to 80 % while the filament has a thickness of 0.01 to 3 mm and a length of 1 m or more.

11. The fiber-reinforced thermoplastic resin filament according to claim 1, having a void ratio of 10 % or less.

12. The fiber-reinforced thermoplastic resin filament according to claim 1, wherein the reinforcing fiber comprises a carbon fiber.

13. A shaped product made from the fiber-reinforced thermoplastic resin filament according to claim 1.

FIG. 1

FIG. 2

FIG. 3

FIG. 4

FIG. 5

FIG. 6

FIG. 7

FIG. 8

## INTERNATIONAL SEARCH REPORT

International application No.

**PCT/JP2023/005178**

### A. CLASSIFICATION OF SUBJECT MATTER

**C08J 5/04**(2006.01)i
FI: C08J5/04 CEZ

According to International Patent Classification (IPC) or to both national classification and IPC

### B. FIELDS SEARCHED

Minimum documentation searched (classification system followed by classification symbols)

C08J5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/217929 A1 (TORAY IND INC) 29 October 2020 (2020-10-29) claims, paragraph [0036], examples | 1-13 |
| Y | JP 2008-6814 A (TORAY IND INC) 17 January 2008 (2008-01-17) claims, paragraph [0017], examples | 1-13 |
| Y | JP 2021-66974 A (UNIV GIFU) 30 April 2021 (2021-04-30) claims, examples | 7-8 |
| Y | JP 2008-240193 A (KURABO IND LTD) 09 October 2008 (2008-10-09) claims, examples | 7-8 |

☐ Further documents are listed in the continuation of Box C.          ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/005178**

| Patent document cited in search report | | | Publication date (day/month/year) | Patent family member(s) | Publication date (day/month/year) |
|---|---|---|---|---|---|
| WO | 2020/217929 | A1 | 29 October 2020 | US 2022/0145047 A1 claims, paragraph [0036], examples | |
| JP | 2008-6814 | A | 17 January 2008 | (Family: none) | |
| JP | 2021-66974 | A | 30 April 2021 | (Family: none) | |
| JP | 2008-240193 | A | 09 October 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013026171 A
- JP H550434 A
- JP 2009500194 A
- JP 2017128072 A